# EUROPEAN PATENT APPLICATION

(11) **EP 4 181 290 A1**
(43) Date of publication of application: **17.05.2023**
(21) Application number: 21886672.1
(22) Date of filing: 20.10.2021
(51) Int. Cl.: H01M 50/24, H01M 50/20

(54) **BATTERY MODULE AND BATTERY PACK INCLUDING SAME**

(30) Priority: 27.10.2020 KR 20200140610
(71) Applicant: LG Energy Solution, Ltd., Seoul 07335 (KR)
(72) Inventor: LEE, Junghoon, Daejeon 34122 (KR); SEONG, Junyeob, Daejeon 34122 (KR); JUNG, Hyemi, Daejeon 34122 (KR); KIM, Kwangmo, Daejeon 34122 (KR); BYOUN, Dayoung, Daejeon 34122 (KR)
(74) Representative: Plasseraud IP
(86) International application number: PCT/KR2021/014651
(87) International publication number: WO 2022/092678

(57) **Abstract**

A battery module according to an embodiment of the present invention includes a battery cell stack in which a plurality of battery cells are stacked; a module frame for housing the battery cell stack; and a flame-retardant member located between a pair of battery cells adjacent to each other in the battery cell stack, wherein the flame-retardant member comprises a flame-retardant pad and at least one fire-extinguishing material layer, and wherein the fire-extinguishing material layer is in contact with at least one battery cell among the pair of battery cells.

## Description

### [TECHNICAL FIELD]

### Cross Citation with Related Application(s)

This application claims the benefit of Korean Patent Application No. 10-2020-0140610 filed on October 27, 2020 with the Korean Intellectual Property Office, the contents of which are incorporated herein by reference in its entirety.

The present invention relates to a battery module and a battery pack including the same, and more particularly, to a battery module that effectively delays the speed of heat propagation between battery cells, and a battery pack including the same.

### [BACKGROUND]

Along with the increase of technology development and demands for mobile devices, the demand for batteries as energy sources is increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

Small-sized mobile devices use one or several battery cells for each device, whereas middle or large-sized devices such as vehicles require high power and large capacity. Therefore, a middle or large-sized battery module having a plurality of battery cells electrically connected to one another is used.

The middle or large-sized battery module is preferably manufactured so as to have as small a size and weight as possible. Consequently, a prismatic battery, a pouch-shaped battery or the like, which can be stacked with high integration and has a small weight relative to capacity, is mainly used as a battery cell of the middle or large-sized battery module. Meanwhile, in order to protect the battery cell stack from external impact, heat or vibration, the battery module may include a module frame which is opened in its front and rear sides and houses the battery cell stack in an internal space.

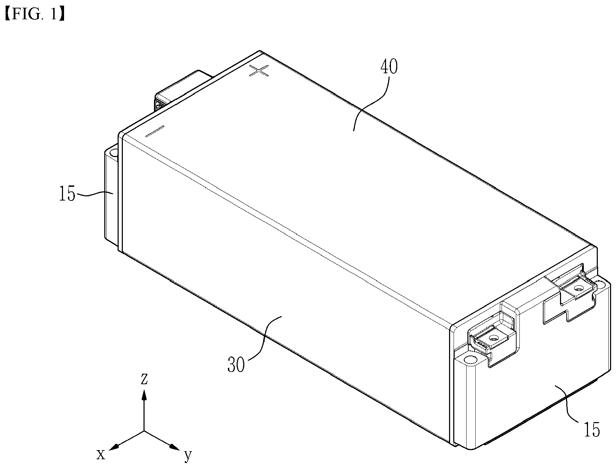

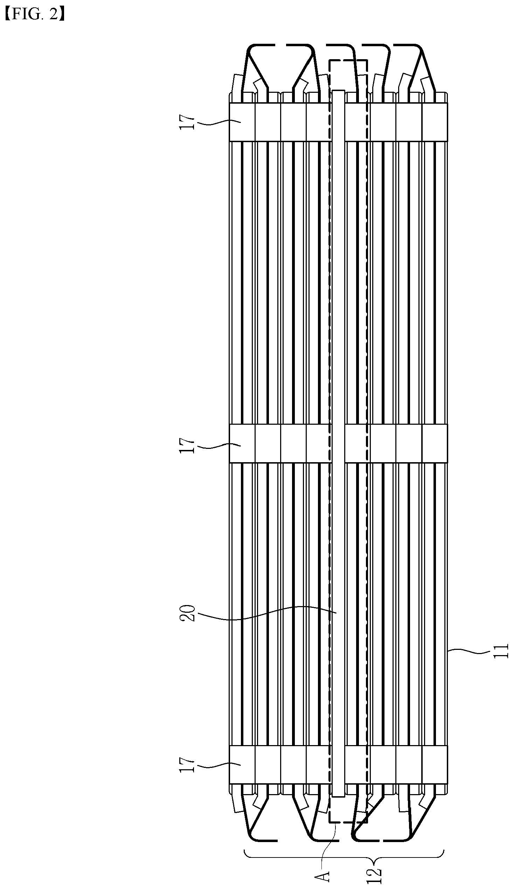

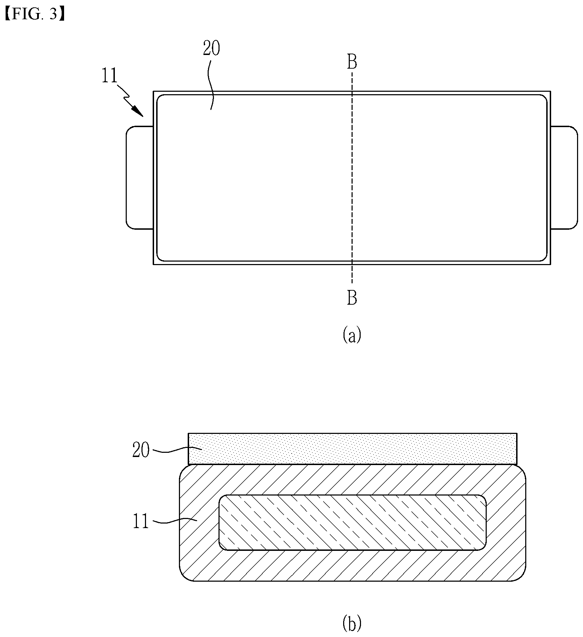

Fig. 1 is a perspective view of a conventional battery module. Fig. 2 is a top view of a battery cell stack included in a conventional battery module. Fig. 3(a) is a top view of a region A in Fig. 2 as viewed from above, and Fig. 3(b) is a cross-sectional view taken along the cutting section B-B in Fig. 3(a).

Referring to Figs. 1 and 2, a conventional battery module includes a battery cell stack 12 in which a plurality of battery cells 11 are stacked in one direction, module frames 30 and 40 that house the battery cell stack 12, and end plates 15 that cover the front and rear surfaces of the battery cell stack 12. The module frames 30 and 40 includes a lower frame 30 that covers the lower part and both side surfaces of the battery cell stack 12, and an upper plate 40 that covers the upper surface of the battery cell stack 12.

Further, the battery cell stack 12 includes a fixing member 17 that fixes a plurality of battery cells 11 to each other, and the fixing member 17 is located at the center and/or the end of the battery cell stack 12. Further, the flame-retardant pad 20 is located between a pair of battery cells adjacent to each other in the battery cell stack 12.

Referring to Figs. 2 and 3, the flame-retardant pad 20 located in the conventional battery cell stack is in contact with the upper surface or the lower surface of the battery cell 11. However, when a swelling phenomenon occurs in a charge and discharge process of the battery cell 11, the volume expansion of the battery cell 11 applies pressure and/or heat to the flame-retardant pad 20. At this time, the conventional flame-retardant pad 20 can change the physical properties according to the swelling phenomenon of the battery cell 11, and in particular, the thermal conductivity may vary depending on the position in contact with the battery cell 11. In one example, when the swelling phenomenon of the battery cell 11 occurs, a relatively large volume expansion occurs in the center of the battery cell 11. Thereby, the conventional flame-retardant pad 20 can change in the thermal conductivity of a portion corresponding to a position in contact with the center of the battery cell 11, which makes it difficult to sufficiently perform the role of the conventional flame-retardant pad 20 for delaying the speed of heat propagation. Therefore, unlike the conventional case, there is a need to develop a battery module that effectively delays the speed of heat propagation between battery cells even when a swelling phenomenon occurs.

### [DETAILED DESCRIPTION OF THE INVENTION]

### [Technical Problem]

It is an object of the present invention to provide a battery module that effectively delays the speed of heat propagation, and a battery pack including the same.

The objects of the present invention are not limited to the aforementioned objects, and other objects which are not described herein should be clearly understood by those skilled in the art from the following detailed description and the accompanying drawings.

### [Technical Solution]

According to one aspect of the present invention, there is provided a battery module comprising: a battery cell stack in which a plurality of battery cells are stacked; a module frame for housing the battery cell stack; and a flame-retardant member located between a pair of battery cells adjacent to each other in the battery cell stack, wherein the flame-retardant member comprises a flame-retardant pad and at least one fire-extinguishing material layer, and wherein the fire-extinguishing material layer is in contact with at least one battery cell among the pair of battery cells.

The flame-retardant pad may extend along a length direction and a width direction of the battery cell.

The fire-extinguishing material layer may be formed in a center portion of the flame-retardant pad.

The fire-extinguishing material layer may extend along the length direction and the width direction of the flame-retardant pad.

The fire-extinguishing material layer may be symmetrical with respect to the length direction and the width direction of the flame-retardant pad.

The length of the fire-extinguishing material layer may decrease toward the outside from the center of the flame-retardant pad.

The flame-retardant member comprises at least two fire-extinguishing material layers, and the at least two fire-extinguishing material layers may be spaced apart from each other.

The at least two fire-extinguishing material layers may be spaced apart from each other at constant interval.

A distance spaced between the at least two fire-extinguishing material layers may increase toward the outside from the center of the flame-retardant pad.

The Lengths of the at least two fire-extinguishing material layers increases toward the outside from the center of the flame-retardant pad.

The fire-extinguishing material layer may be formed by replacing at least a part of the flame-retardant pad.

The fire-extinguishing material layer may be formed by penetrating at least a part of the flame-retardant pad.

The fire-extinguishing material layer may be attached to at least one surface of an upper surface and a lower surface of the flame-retardant pad.

According to another aspect of the present invention, there is provided a battery pack comprising the above-mentioned battery module.

### [Advantageous Effects]

According to embodiments of the present invention, a flame-retardant member including a fire-extinguishing material layer is located between a pair of battery cells adjacent to each other in the battery cell stack, thereby effectively delaying the speed of heat propagation between the battery cells.

The effects of the present invention are not limited to the effects mentioned above and additional other effects not described above will be clearly understood from the detailed description and the accompanying drawings by those skilled in the art.

### [BRIEF DESCRIPTION OF THE DRAWINGS]

Fig. 1 is a perspective view of a conventional battery module;
Fig. 2 is a top view of a battery cell stack included in a conventional battery module;
Fig. 3(a) is a top view of a region A in Fig. 2 as viewed from above, and Fig. 3(b) is a cross-sectional view taken along the cutting section B-B in Fig. 3(a);
Fig. 4 is a top view of the battery cell stack included in the battery module according to an embodiment of the present invention;
Fig. 5 is a top view of a region C in Fig. 4 as viewed from above;
Fig. 6 is a cross-sectional view of the flame-retardant member taken along the cutting line D-D of Fig. 5; and
Fig. 7 s a cross-sectional view showing a state in which the battery cell of the battery cell stack including the flame-retardant member 200 of Fig. 6(a) is expanded.

### [DETAILED DESCRIPTION OF THE EMBODIMENTS]

Hereinafter, various embodiments of the present invention will be described in detail with reference to the accompanying drawings so that those skilled in the art can easily carry out them. The present invention may be modified in various different ways, and is not limited to the embodiments set forth herein.

A description of parts not related to the description will be omitted herein for clarity, and like reference numerals designate like elements throughout the description.

Further, in the drawings, the size and thickness of each element are arbitrarily illustrated for convenience of description, and the present invention is not necessarily limited to those illustrated in the drawings. In the drawings, the thickness of layers, regions, etc. are exaggerated for clarity. In the drawings, for convenience of description, the thicknesses of some layers and regions are exaggerated.

Further, throughout the specification, when a portion is referred to as "including" a certain component, it means that the portion can further include other components, without excluding the other components, unless otherwise stated.

Further, throughout the specification, when referred to as "planar", it means when a target portion is viewed from the upper side, and when referred to as "cross-sectional", it means when a target portion is viewed from the side of a cross section cut vertically.

Now, a battery module according to an embodiment of the present invention will be described. However, the description herein is made based on the front surface among the front and rear surfaces of the battery module, without being necessarily limited thereto, and even in the case of the rear surface, a description may be given with same or similar contents.

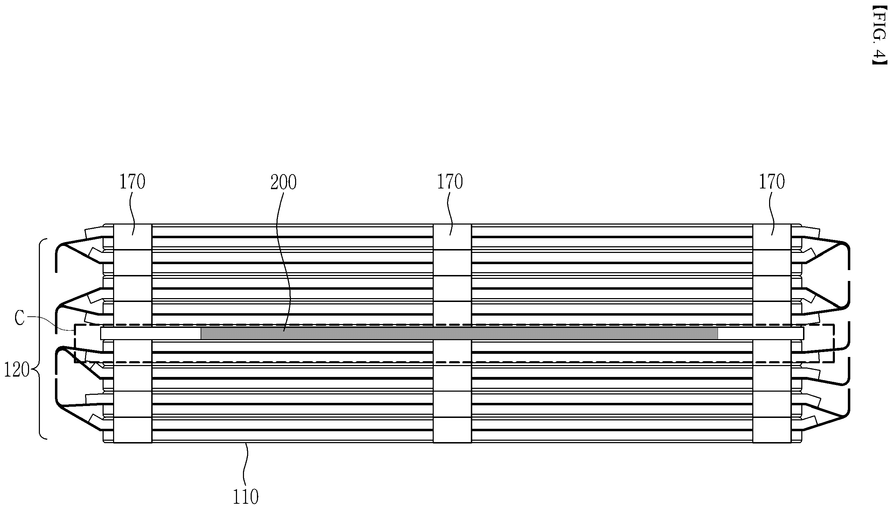

Fig. 4 is a top view of the battery cell stack included in the battery module according to an embodiment of the present invention.

Referring to Fig. 4, a battery module according to an embodiment of the present invention includes a battery cell stack 120 in which a plurality of battery cells 110 are stacked, a module frame (not shown) that houses the battery cell stack, and a flame-retardant member 200 that is located between a pair of battery cells adjacent to each other in the battery cell stack 120. Here, the module frame may be identical to or similar to the module frames 30 and 40 shown in Fig. 1, but is not limited thereto.

Further, the battery cell stack 120 includes a fixing member 170 that fixes the plurality of battery cells 110 to each other, and the fixing member 170 is located at the center and/or the end of the battery cell stack 120.

Next, the flame-retardant member 200 and the battery cell 110 adjacent to the flame-retardant member 200 will be mainly described.

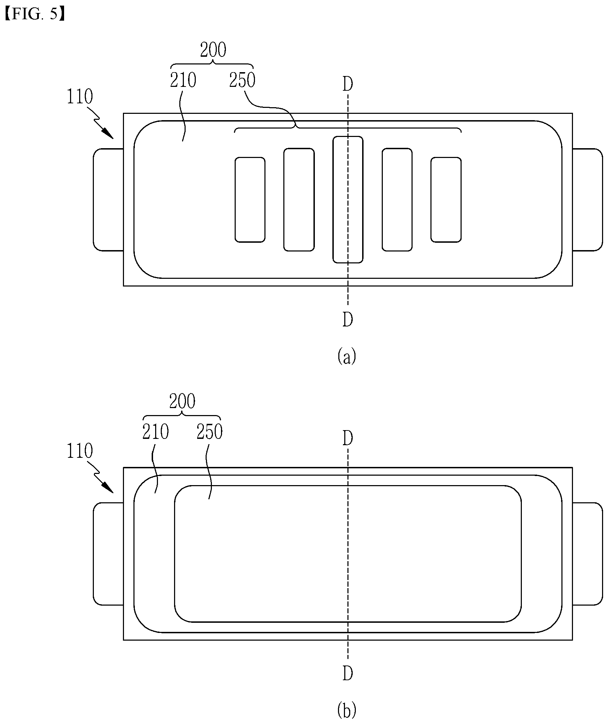

Fig. 5 is a top view of a region C in Fig. 4 as viewed from above.

Referring to Figs. 4 and 5, the flame-retardant member 200 may include a flame-retardant pad 210 and at least one fire-extinguishing material layer 250.

The flame-retardant pad 210 may be made of a flame-retardant material. More preferably, a flame-retardant material with high compressibility can be used. As an example, the flame-retardant pad 210 can be selected and used from a silicone foam, a mica sheet, and the like. However, the present invention is not limited thereto, and any material made of a flame-retardant material can be used without limitation.

Thereby, the battery module according to the present embodiment can prevent or delay heat from propagating to other battery cells 110 when a flame generates in a part of the battery cells 110 of the battery cell stack 120 with the flame-retardant pad 210 as a boundary.

The fire-extinguishing material layer 250 may be made of a fire-extinguishing agent material. Here, the fire-extinguishing agent material may be a fire-extinguishing agent material in the form of powder that is commonly used. As an example, the fire-extinguishing agent material may be any one of sodium hydrogen carbonate (NaHCO₃), potassium hydrogen carbonate (KHCO₃), ammonium phosphate (NH₄H₂PO₃), and a mixture of "potassium hydrogen carbonate (KHCO₃) and urea ((NH₂)₂CO)". In particular, the fire-extinguishing agent material included in the fire-extinguishing material layer 250 may include potassium hydrogen carbonate (KHCO₃). However, the fire-extinguishing agent material is not limited thereto, and any material that performs a fire extinguishing function can be used without limitation.

Thereby, in the battery module according to the present embodiment, when the battery cell 110 adjacent to the fire-extinguishing material layer 250 ignites, the fire-extinguishing material contained in the fire-extinguishing material layer 250 is distributed toward the battery cell 110, so that the flame of the battery cell 110 can be suppressed. In addition, in the process of extinguishing the flame generated in the battery cell 100 by the fire-extinguishing material layer 250, carbon dioxide and water vapor can be generated. Due to such a reaction, the heat of the battery cell 110 can be absorbed by an endothermic reaction, and the oxygen supply can also be cut off, so that the speed of flame and heat propagation between battery cells can be effectively delayed.

Referring to Fig. 5, the flame-retardant pad 210 may extend along the length and width directions of the battery cell 110. As an example, the flame-retardant pad 210 may be identical to or larger than the length and width of the battery cell 110, respectively.

Thereby, the flame-retardant pad 210 can easily delay the flame from propagating to the other battery cells 110 when a flame generates in the battery cell 110. Unlike the same, when the flame-retardant pad 210 is too small than the length and width of the battery cell 110, there is a problem that flame and heat may be propagated to other battery cells 110 through the periphery of the flame-retardant pad 210 when an ignition phenomenon occurs in the battery cell 110.

Referring to Fig. 5, according to an embodiment of the present invention, a flame-retardant member 200 is located between a pair of battery cells, wherein the fire-extinguishing material layer 250 may be in contact with at least one of the pair of battery cells. Further, the fire-extinguishing material layer 250 may be formed at a position corresponding to at least a part of the flame-retardant pad 210. As an example, the fire-extinguishing material layer 250 may be formed in the center of the flame-retardant pad 210. That is, when a swelling phenomenon occurs in the battery cell 110 according to the present embodiment, the fire-extinguishing material layer 250 may be in contact with a position corresponding to the center in which the battery cell 110 is mainly expanded.

Thereby, the battery cell 110 and the fire-extinguishing material layer 250 are in direct contact with each other, so that a change in the thermal conductivity of the flame-retardant pad 210 can be partially prevented. Further, even if a part of the flame-retardant pad 210 changes in thermal conductivity by volume expansion caused by the swelling phenomenon of the battery cell 110, the fire-extinguishing material layer 250 can effectively lull a flame generated in the battery cell 110 when an ignition phenomenon occurs in the battery cell 110.

The fire-extinguishing material layer 250 may be symmetrical with respect to the longitudinal direction of the flame-retardant pad 210. Further, the fire-extinguishing material layer 250 may be symmetrical with respect to the width direction of the flame-retardant pad 210. Thereby, the battery module according to the present embodiment not only can uniformly prevent a change in the thermal conductivity of the flame-retardant pad 210 by allowing the fire-extinguishing material layer 250 to uniformly contact the battery cell 110, but also uniformly lull the flame generated in the battery cell 110 when an ignition phenomenon occurs in the battery cell 110.

Referring to Fig. 5(a), the length of the fire-extinguishing material layer 250 may decrease toward the outside from the center of the flame-retardant pad 210. As an example, the fire-extinguishing material layer 250 may be formed in the center or the central part of the flame-retardant pad 210 with the largest length, and the flame-retardant pad 210 may be formed to have the shortest length toward the outer or end of the pad 210. That is, in the battery module according to the present embodiment, the fire-extinguishing material layer 250 of the flame-retardant member 200 can be formed centered on the central part of the battery cell 110 in which the volume expansion occurs most frequently when the swelling phenomenon of the battery cell 110 occurs. Thereby, the battery module according to the present embodiment can effectively lull around the central part of the battery cell 110 while minimizing the area of the fire extinguishing material layer 250. In addition, there is an advantage in that it can effectively delay the speed of heat propagation between battery cells.

Referring to Fig. 5(a), the flame-retardant member 200 includes at least two fire-extinguishing material layers 250, and at least two fire-extinguishing material layers 250 may be spaced apart from each other. Further, the at least two fire-extinguishing material layers 250 may be spaced apart from each other at the same distance, or may be spaced apart from each other at different distances. As an example, the distance spaced between the at least two fire-extinguishing material layers 250 may increase toward the outside from the center of the flame-retardant pad 210. Therefore, the battery module according to the present embodiment can effectively lull the flame generated in the battery cell 110, while minimizing the area of the fire-extinguishing material layer 250. Further, there is an advantage in that it can effectively delay the speed of heat propagation between battery cells.

As an example, the at least two fire-extinguishing material layers 250 may become smaller in length as they are located outward from the center of the flame-retardant pad 210. Thereby, the battery module according to the present embodiment has an advantage that it can sufficiently perform the effect of strengthening the flame generated in the battery cell 110 and the effect of delaying the speed of heat propagation between the battery cells while further minimizing the area of the fire-extinguishing material layer 250.

Further, referring to Fig. 5 (b), the flame-retardant member 200 may configured such that one fire-extinguishing material layer 250 is formed on the flame-retardant pad 210. As an example, the first-extinguishing material layer 250 may extend along the length and width of the flame-retardant pad 210, and may be formed in a size smaller than the length and width of the flame-retardant pad 210. Thereby, the battery module according to the present embodiment has an advantage in that it is possible to effectively lull the flame generated in the battery cell 110 by l maximizing the area of the fire-extinguishing material layer 250 in the flame-retardant member 200, and it is possible to effectively delay the speed of heat propagation between battery cells.

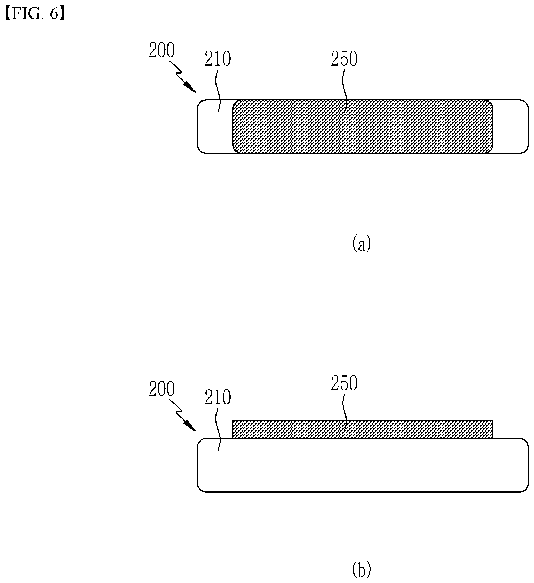

Fig. 6 is a cross-sectional view of the flame-retardant member taken along the cutting line D-D of Fig. 5. Fig. 6(a) is a cross-sectional view showing that the fire-extinguishing material layer 250 is located through the flame-retardant pad 210 in the flame-retardant member 200 of Fig. 5. Fig. 6(b) is a cross-sectional view illustrating that the first-extinguishing material layer 250 is located on the flame-retardant pad 210 in the flame-retardant member 200 of Fig. 5.

According to another embodiment of the present invention, as shown in Fig. 6(a), the fire-extinguishing material layer 250 may be formed by replacing at least a part of the flame-retardant pad 210. As an example, the fire-extinguishing material layer 250 may be formed by penetrating at least a portion of the flame-retardant pad 210.

Therefore, the fire-extinguishing material layer 250 may be in contact with the battery cell located adjacent to the flame-retardant member 200. Further, the flame-retardant member 200 according to the present embodiment can maintain the existing thickness even if the fire-extinguishing material layer 250 is included, so that the area in which the fire-extinguishing material layer 250 can be formed may not be significantly limited. In addition, the battery capacity of the battery cell stack 120 in the battery module can also be maintained.

According to another embodiment of the present invention, as shown in Fig. 6 (b), the fire-extinguishing material layer 250 may be attached to at least one surface of the upper and lower surfaces of the flame-retardant pad 210. More preferably, the fire-extinguishing material layer 250 may be attached to both the upper and lower surfaces of the flame-retardant pad 210.

Thereby, the fire-extinguishing material layer 250 may be in contact with each of the battery cells located adjacent to the flame-retardant member 200. Further, in the flame-retardant member 200 according to the present embodiment, the flame-retardant pad 210 and the fire-extinguishing material layer 250 are separately separated, whereby the flame suppression effect by the fire-extinguishing material layer 250 is added while maintaining the flame retardant effect of the flame-retardant member 200, and thus the speed of flame and heat propagation between battery cells can be effectively delayed. Further, the flame-retardant member 200 according to the present embodiment has an advantage in the fire-extinguishing material layer 250 is formed on the flame-retardant pad 210, the manufacturing process is simple and the manufacturing cost can also be reduced.

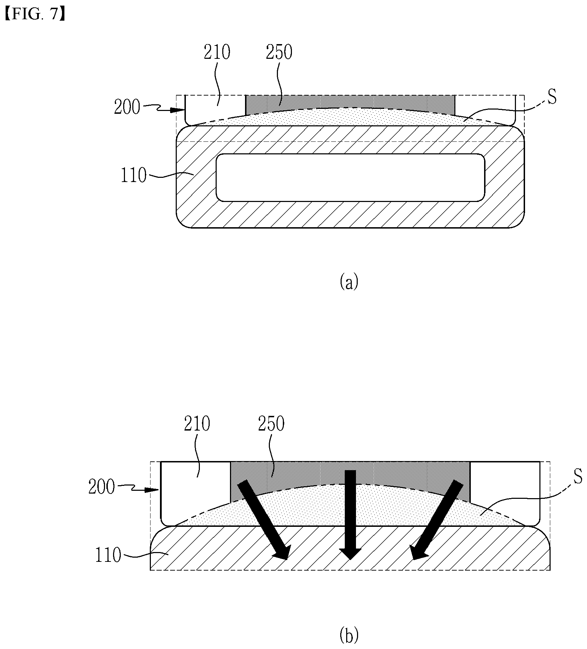

Fig. 7 s a cross-sectional view showing a state in which the battery cell of the battery cell stack including the flame-retardant member 200 of Fig. 6(a) is expanded. Fig. 7(a) is a diagram showing a flame-retardant member 200 in contact with the expanded portion S in which a part of the battery cell 110 is expanded. Fig. 7(b) is a diagram showing that a part of Fig. 7(a) is enlarged and the fire-extinguishing material is distributed toward the expansion part S in the fire-extinguishing material layer 250 of the flame-retardant member 200. However, Fig. 7 shows only the flame-retardant member 200 of Fig. 6(a), but the present invention is not limited thereto, and it can be similarly described even in the case of Fig. 6(b).

Referring to Figs. 3 and 7, the flame-retardant pad 20 is different from the conventional flame-retardant pad 20. In the battery module according to the present embodiment, the fire-extinguishing material layer 250 is formed at a position corresponding to the expansion portion S due to the swelling phenomenon of the battery cell 110. Thus, it is possible to easily lull the flame for the expansion portion S while preventing the change in the thermal conductivity of the flame-retardant pad 210. Further, even if the thermal conductivity of the flame-retardant pad 210 is partially changed due to the swelling phenomenon of the battery cell 110, the speed of propagation of flame and heat generated in the battery cell 110 through the fire-extinguishing material layer 250 can be effectively delayed.

A battery pack according to another embodiment of the present invention includes the battery module described above. Meanwhile, one or more battery modules according to the present embodiment may be packaged in a pack case to form a battery pack.

The above-mentioned battery module and the battery pack including the same can be applied to a vehicle means such as an electric bicycle, an electric vehicle, or a hybrid vehicle, but the present invention is not limited thereto, and is applicable to various devices that can use a battery module, which also falls under the scope of the present invention.

Although the invention has been shown and described with reference to the preferred embodiments, the scope of the present invention is not limited thereto, and numerous changes and modifications can be devised by those skilled in the art using the principles of the invention defined in the appended claims, which also falls within the spirit and scope of the present invention.

### [Description of Reference Numerals]

110: battery cell
120: battery cell stack
170: fixing member
200: flame-retardant member
210: flame-retardant pad
250: fire-extinguishing material layer

## Claims

1. A battery module comprising:
a battery cell stack in which a plurality of battery cells are stacked;
a module frame for housing the battery cell stack; and
a flame-retardant member located between a pair of battery cells adjacent to each other in the battery cell stack,
wherein the flame-retardant member comprises a flame-retardant pad and at least one fire-extinguishing material layer, and
wherein the fire-extinguishing material layer is in contact with at least one battery cell among the pair of battery cells.

2. The battery module of claim 1, wherein:
the flame-retardant pad extends along a length direction and a width direction of the battery cell.

3. The battery module of claim 1, wherein:
the fire-extinguishing material layer is formed in a center portion of the flame-retardant pad.

4. The battery module of claim 1, wherein:
the fire-extinguishing material layer extends along a length direction and a width direction of the flame-retardant pad.

5. The battery module of claim 4, wherein:
the fire-extinguishing material layer is symmetrical with respect to the length direction and the width direction of the flame-retardant pad.

6. The battery module of claim 4, wherein:
A length of the fire-extinguishing material layer decreases toward the outside from a center of the flame-retardant pad.

7. The battery module of claim 1, wherein:
the flame-retardant member comprises at least two fire-extinguishing material layers, and
the at least two fire-extinguishing material layers are spaced apart from each other.

8. The battery module of claim 7, wherein:
the at least two fire-extinguishing material layers are spaced apart from each other at a constant interval.

9. The battery module of claim 7, wherein:
A distance spaced between the at least two fire-extinguishing material layers increases toward the outside from a center of the flame-retardant pad.

10. The battery module of claim 7, wherein:
Lengths of the at least two fire-extinguishing material layers increases toward the outside from a center of the flame-retardant pad.

11. The battery module of claim 1, wherein:
the fire-extinguishing material layer is formed by replacing at least a part of the flame-retardant pad.

12. The battery module of claim 10, wherein:
the fire-extinguishing material layer is formed by penetrating at least a part of the flame-retardant pad.

13. The battery module of claim 1, wherein:
the fire-extinguishing material layer is attached to at least one surface of an upper surface and a lower surface of the flame-retardant pad.

14. A battery pack comprising the battery module of claim 1.
